# EUROPÄISCHE PATENTSCHRIFT

(11) **EP 2 525 486 B1**
(45) Veröffentlichungstag und Bekanntmachung des Hinweises auf die Patenterteilung: **17.10.2018**
(21) Anmeldenummer: 11166214.4
(22) Anmeldetag: 16.05.2011
(51) Int. Cl.: H02M 7/5387

(54) **Verfahren zum Betrieb einer Antriebssteuerungseinrichtung und nach dem Verfahren arbeitende Antriebssteuerungseinrichtung**
Method for operating a drive control device and drive control device operating by the method
Procédé destiné au fonctionnement d'un dispositif de commande d'entraînement et dispositif de commande d'entraînement fonctionnant selon ce procédé

(43) Veröffentlichungstag der Anmeldung: 21.11.2012
(73) Patentinhaber: Siemens Aktiengesellschaft, 80333 München (DE)
(72) Erfinder: Eckardt, Dieter, 91074, Herzogenaurach (DE); Krätz, Hans-Peter, 91056, Erlangen (DE)

(56) Entgegenhaltungen:
- US-A- 5 045 988

## Beschreibung

Die Erfindung betrifft ein Verfahren zum Betrieb einer Antriebssteuerungseinrichtung und eine nach dem Verfahren arbeitende Antriebssteuerungseinrichtung sowie ein Computerprogramm zur Implementation des Verfahrens und damit auch eine Antriebssteuerungseinrichtung mit Mitteln zur Ausführung eines solchen Computerprogramms. Speziell betrifft die Erfindung ein Verfahren zum Betrieb einer Antriebssteuerungseinrichtung, wobei diese einen Wechselrichter aufweist und wobei dieser durch Ansteuersignale ansteuerbare Halbleiterschalter umfasst.

Derartige Antriebssteuerungseinrichtungen sind an sich bekannt. Die Wechselrichter erzeugen aufgrund der Ansteuerung durch die Ansteuersignale eine Ausgangsspannung mit variabler Frequenz und Spannung. Dadurch kann die Drehzahl und das Drehmoment z.B. eines Elektromotors als Last der Antriebssteuerungseinrichtung eingestellt und geregelt werden. Eine Ansteuerungselektronik zur Generierung der Ansteuersignale liegt auf einer Niederspannungsseite der Antriebssteuerungseinrichtung und der Wechselrichter demgegenüber auf einer Hochspannungsseite. Zwischen der Niederspannungs- und Hochspannungsseite besteht aus Sicherheitsgründen eine Potentialtrennung. Die Ansteuersignale müssen aber über diese Potentialtrennung hinweg übertragen werden. Dafür ist u.a. eine serielle Übertragung in Betracht gezogen worden. Nachteilig dabei ist aber, dass sich aufgrund hoher Spannungssteilheiten beim Schalten der Halbleiterschalter Verschiebeströme zwischen der Hoch- und Niederspannungsseite ergeben können. Diese stören die Signalübertragung und können dazu führen, dass die Halbleiterschalter nicht mehr richtig angesteuert werden können. Zur Lösung dieses Problems ist bisher in Betracht gezogen worden, die serielle Übertragung in ihrer Bandbreite soweit zu begrenzen, dass ein ausreichender Störabstand gegeben ist. Für evtl. noch auftretende Störungen werden Sicherheitsmaßnahmen, z.B. eine Telegrammwiederholung, implementiert, die sich aber letztlich negativ auf die Bandbreite auswirken. Alternativ kommt auch eine getrennte Übertragung der einzelnen Ansteuersignale in Betracht. Dies bedeutet aber, für jedes Ansteuersignal eine eigene Potentialtrennung zu implementieren, so dass diese Alternative sich als unflexibel und teuer darstellt.

Aus der US 5,045,988 B1 sind ein Verfahren zum Betrieb einer Antriebssteuerungseinrichtung und eine nach dem Verfahren arbeitende Antriebssteuerungseinrichtung bekannt, bei dem bzw. bei der auf der Hochspannungsseite ein parametrierbarer ASIC zur Generierung der Ansteuersignale vorgesehen ist. Die Parametrierung erfolgt aufgrund von Daten, die dem auf der Hochspannungsseite befindlichen ASIC von der Niederspannungsseite im Wege einer seriellen Datenübertragung übermittelt werden.

Eine Aufgabe der Erfindung besteht entsprechend darin, ein weiteres Verfahren zum Betrieb einer Antriebssteuerungseinrichtung und eine nach dem Verfahren arbeitende Antriebssteuerungseinrichtung anzugeben, insbesondere ein Verfahren bei dem die oben genannten Nachteile im Hinblick auf Störungen der Übertragung der Ansteuersignalzeitpunkte von der Niederspannungs- zur Hochspannungsseite aufgrund von Schaltvorgängen des Halbleiterschalter vermieden oder zumindest hinsichtlich ihrer Auswirkungen reduziert werden.

Diese Aufgabe wird erfindungsgemäß mit einem Verfahren mit den Merkmalen des Anspruchs 1 oder einer nach dem Verfahren abreitenden Vorrichtung gelöst. Dazu ist bei einem Verfahren zum Betrieb einer Antriebssteuerungseinrichtung mit einem. Wechselrichter mit durch Ansteuersignale ansteuerbaren Halbleiterschaltern, vorgesehen, dass eine Ansteuerlogik für jedes Ansteuersignal einen Ansteuersignalzeitpunkt ermittelt und die Ansteuersignalzeitpunkte im Betrieb von einer Niederspannungsseite der Antriebssteuerungseinrichtung mit der Ansteuerlogik zu einer Hochspannungsseite der Antriebssteuerungseinrichtung mit dem Wechselrichter übertragen werden, sowie dass die Übertragung der Ansteuersignalzeitpunkte während zwischen einzelnen Schaltpunkten der Halbleiterschalter verbleibenden Schaltpausen erfolgt und dass anhand der übertragenen Ansteuersignalzeitpunkte auf der Hochspannungsseite Ansteuersignale zur Ansteuerung der Halbleiterschalter generiert werden.

Der Vorteil der Erfindung besteht darin, dass durch die Übertragung der Ansteuersignalzeitpunkte während der Schaltpausen der Halbleiterschalter Störungen aufgrund von Schaltvorgängen der Halbleiterschalter vermieden werden. Störungen aufgrund der oben genannten Verschiebeströme treten nämlich nur dann auf, wenn die Halbleiterschalter schalten. Wird der Zeitpunkt der Übertragung so gewählt, dass keine Halbleiterschalter schalten, können die Verschiebeströme die Übertragung der Ansteuersignalzeitpunkte nicht mehr stören.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Eine Ermittlung einer Lage und Länge von Schaltpausen der Halbleiterschalter kann durch die Ansteuerlogik zusammen mit der Ermittlung der Ansteuersignalzeitpunkte erfolgen, denn mit den ermittelten Ansteuersignalzeitpunkten liegt eine Position der Schaltpunkte der Halbleiterschalter und ein dazwischen jeweils verbleibender Zeitraum und damit unmittelbar eine Information hinsichtlich Lage und Länge der Schaltpausen vor. Die Übertragung der Ansteuersignalzeitpunkte während der Schaltpausen der Halbleiterschalter kann damit in besonders günstiger Art und Weise durch die Ansteuerlogik durchgeführt oder initiiert werden.

Bei einer Ausführungsform des Verfahrens ist vorgesehen, dass die Ansteuersignalzeitpunkte von der Ansteuerlogik zu einer Ansteuerschaltung auf der Hochspannungsseite der Antriebssteuerungseinrichtung übermittelt werden, dass die Ansteuerschaltung die übermittelten Ansteuersignalzeitpunkte zwischenspeichert, dass die Ansteuerschaltung die zwischengespeicherten Ansteuersignalzeitpunkte mit dem Wert eines Zeitgebers, einer Uhr, Zählers oder dergleichen - im Folgenden zusammenfassend als Zeitgeber bezeichnet - vergleicht und dass in Abhängigkeit vom Ergebnis des Vergleichs durch die Ansteuerschaltung jeweils ein Ansteuersignal generiert wird. Dadurch, dass die übermittelten Ansteuersignalzeitpunkte durch die Ansteuerschaltung zwischengespeichert werden, ist eine zeitliche Entkopplung des Übertragungszeitpunkts der Ansteuersignalzeitpunkte von der Generierung eines oder mehrerer Ansteuersignale gegeben. Störanfällige Ansteuersignale brauchen nicht mehr direkt von der Niederspannungs- zur Hochspannungsseite übertragen werden und stattdessen erfolgt eine Übertragung von Ansteuersignalzeitpunkten als Basis für eine spätere und unabhängige Generierung von Ansteuersignalen.

Wenn die Übertragung der Ansteuersignalzeitpunkte durch eine serielle Übertragung erfolgt, kann hinsichtlich der dafür notwendigen elektronischen Bauelemente auf bekannte und kostengünstige Elemente zurückgegriffen werden. Eine serielle Übertragung erlaubt zudem die Zusammenfassung mehrerer Ansteuersignalzeitpunkte zu einem Telegramm. Für ein Telegramm mit einem oder mehreren davon umfassten Ansteuersignalzeitpunkten können bekannte Verfahren zur Erkennung von Übertragungsfehlern eingesetzt werden, so dass bei einer erkannten Fehlerhaftigkeit einer Übertragung eine erneute Übertragung initiiert werden kann. Speziell kommt eine Absicherung der Datenübertragung mittels korrigierbarer Codes, z.B. Reed-Solomon-Codes oder dergleichen, in Betracht.

Als Zeitpunkt zur Übertragung der Ansteuersignalzeitpunkte während der Schaltpausen der Halbleiterschalter kommt eine Übertragung eines Telegramms mit einer Mehrzahl von Ansteuersignalzeitpunkten in der Mitte eines Schaltintervalls der Halbleiterschalter in Betracht. Damit werden eine zeitliche Überschneidung der Übertragung mit den Schaltpunkten der Halbleiterschalter und damit ggf. einhergehende Störeinflüsse vermieden. Ein Schaltintervall ist der Zeitraum zwischen zwei Schaltpunkten eines Halbleiterschalters. Das Schaltintervall schließt also die Schaltpause ein. Je nach Länge des zur Übertragung zur Verfügung stehenden Schaltintervalls/Schaltpause der Halbleiterschalter kommt auch in Betracht, die serielle Übertragung in Form zweier Telegramme mit darauf aufgeteilten Ansteuersignalzeitpunkten durchzuführen, wobei eines der Telegramme am Anfang eines Schaltintervalls der Halbleiterschalter und das andere Telegramm in der Mitte des Schaltintervalls übertragen wird.

Die oben genannte Aufgabe wird auch mit einer Antriebssteuerungseinrichtung gelöst, die nach dem Verfahren wie hier und im Folgenden beschrieben arbeitet und dazu Mittel zur Durchführung des Verfahrens umfasst. Das Verfahren und evtl. Ausgestaltungen ist bzw. sind dabei bevorzugt in Software implementiert. Die Erfindung ist damit einerseits auch ein Computerprogramm mit durch einen Computer ausführbaren Programmcodeanweisungen und andererseits ein Speichermedium mit einem derartigen Computerprogramm sowie schließlich auch eine Antriebssteuerungseinrichtung, in dessen Speicher als Mittel zur Durchführung des Verfahrens und seiner Ausgestaltungen ein solches Computerprogramm geladen oder ladbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: eine Antriebssteuerungseinrichtung mit einem Wechselrichter auf einer Hochspannungsseite und einer Ansteuerlogik zur Generierung von Ansteuersignalen für den Wechselrichter auf einer Niederspannungsseite,
- FIG 2: eine Antriebssteuerungseinrichtung gemäß FIG 1, bei der die Ansteuersignale über eine serielle Verbindung von der Niederspannungs- zur Hochspannungsseite übertragen werden,
- FIG 3: eine Antriebssteuerungseinrichtung gemäß FIG 1, bei der als Basis für die Ansteuersignale von der Niederspannungs- zur Hochspannungsseite über die serielle Verbindung Ansteuersignalzeitpunkte zu einer Ansteuerschaltung übertragen werden und
- FIG 4: Details der Ansteuerschaltung.

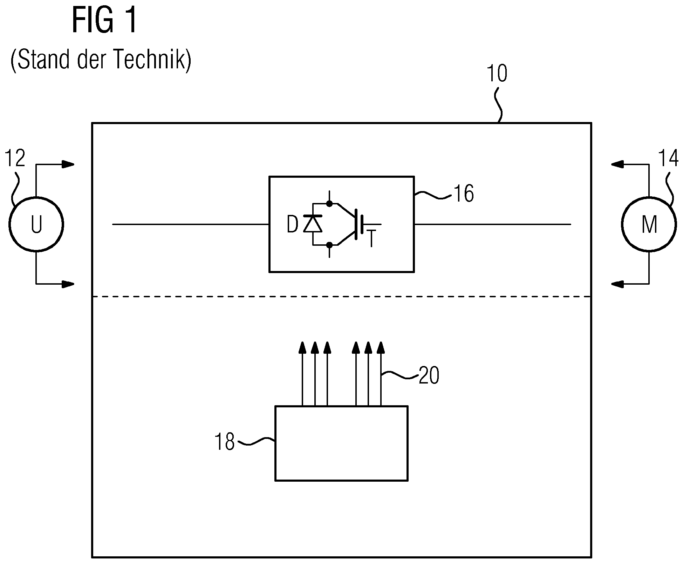

FIG 1 zeigt schematisch vereinfacht eine Antriebssteuerungseinrichtung 10, die eingangsseitig an eine Spannungsquelle 12 angeschlossen oder anschließbar ist und an die ausgangsseitig eine Last 14 angeschlossen oder anschließbar ist. Bei der angeschlossenen Last 14 handelt es sich zum Beispiel um einen drehzahlgeregelten Elektromotor. Die Antriebssteuerungseinrichtung 10 umfasst einen Wechselrichter 16 mit einer nur schematisch dargestellten, mit steuerbaren Halbleiterschaltern T und antiparallelen Dioden D bestückten, an sich bekannten Brückenschaltung, insbesondere in einer Ausführung als IGBT-B6-Brücke.

Für die Drehzahlregelung von z.B. Elektromotoren als Last 14 erzeugt der Wechselrichter 16 aus einer Zwischenkreisgleichspannung durch geeignetes Schalten der Halbleiterschalter T eine Ausgangsspannung mit variabler Frequenz und Spannung. Dadurch können die Drehzahl und das Drehmoment von Elektromotoren eingestellt und geregelt werden.

Zur Ansteuerung der Halbleiterschalter T des Wechselrichters 16 ist eine Ansteuerlogik 18 vorgesehen. Die Ansteuerlogik 18 erzeugt für jeden Halbleiterschalter T ein Ansteuersignal 20, das zum jeweiligen Halbleiterschalter T übermittelt wird. Der Stromrichter 16 gehört zu einer Hochspannungsseite der Antriebssteuerungseinrichtung 10. Die Ansteuerlogik 18 gehört demgegenüber zu einer Niederspannungsseite der Antriebssteuerungseinrichtung 10. Hochspannungs- und Niederspannungsseite sind in der Darstellung durch eine gestrichelte Linie getrennt.

Zwischen der Hochspannungs- und Niederspannungsseite ist üblicherweise eine Potentialtrennung vorgesehen, um berührungsgefährliche Spannungen der Hochspannungsseite zu kapseln. Die Ansteuersignale 20 für die Halbleiterschalter T müssen über diese Potentialtrennung hinweg übertragen werden. Da im Betrieb eine Vielzahl von Ansteuersignalen 20 übertragen werden muss, geht der Trend zu einer seriellen Übertragung.

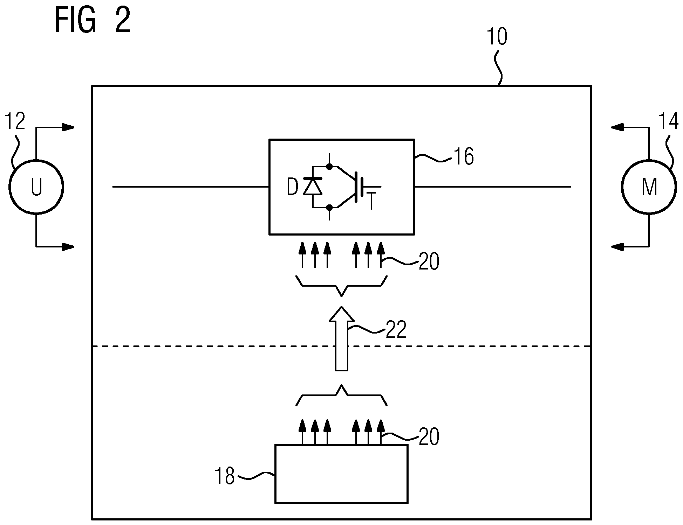

FIG 2 zeigt insoweit - ebenfalls schematisch vereinfacht - die Situation gemäß FIG 1 bei einer seriellen Übertragung der Ansteuersignale 20. Die Ansteuersignale 20 werden nicht mehr einzeln, sondern über eine hier als Blockpfeil gezeigte und ansonsten an sich bekannte serielle Verbindung 22 übertragen. Die serielle Übertragung 22 vermeidet ansonsten erforderliche und teure Bausteine zur Potentialtrennung. Durch die hohen Spannungssteilheiten beim Schalten der Halbleiterschalter T kommt es allerdings zu Verschiebeströmen zwischen der Hochspannungs- und Niederspannungsseite der Antriebssteuerungseinrichtung 10. Diese Verschiebeströme können die serielle Übertragung der Ansteuersignale 20 stören und dazu führen, dass die Halbleiterschalter T nicht mehr richtig angesteuert werden können.

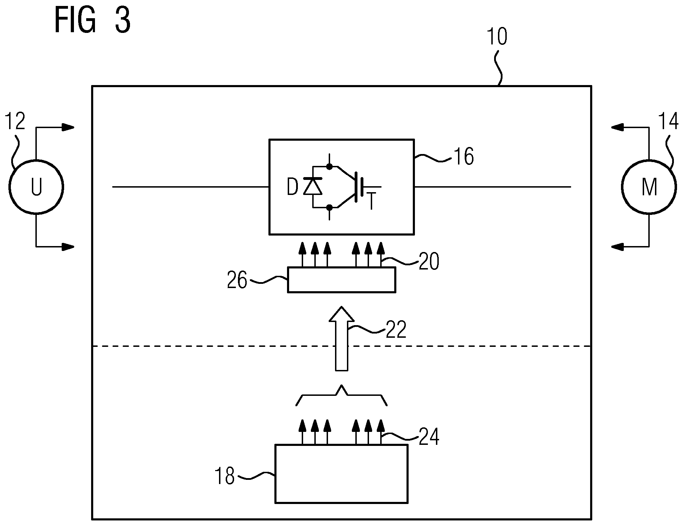

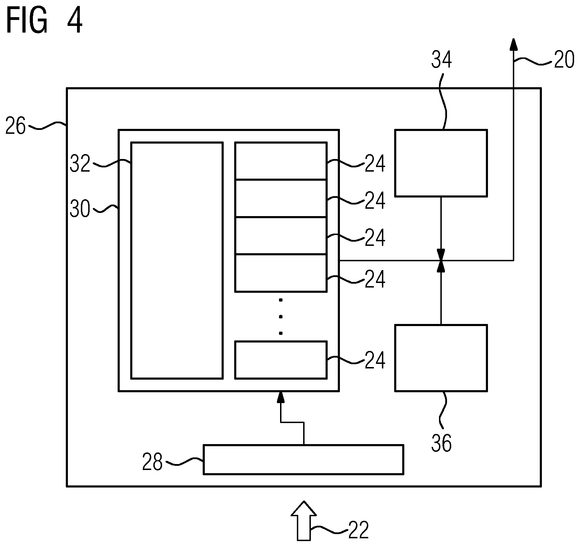

FIG 3 zeigt eine Ausführungsform der Antriebssteuerungseinrichtung 10, die nach dem hier vorgeschlagenen Verfahren arbeiten kann. Hier werden nicht mehr die Ansteuersignale 20 selbst übertragen, sondern Zeitinformationen hinsichtlich der Zeitpunkte oder der Periodizität, zu denen ein Ansteuersignal zu generieren ist. Die diesbezüglichen, hier als Ansteuersignalzeitpunkte 24 bezeichneten Informationen werden von der Ansteuerlogik 18 ermittelt. Die Ansteuersignalzeitpunkte 24 werden von der Niederspannungsseite über die serielle Verbindung 22 zur Hochspannungsseite und dort an eine Ansteuerschaltung 26 übermittelt. Diese umfasst einen Speicher 30 (FIG 4), um die über die serielle Verbindung 22 empfangenen Ansteuersignalzeitpunkte 24 zwischenspeichern zu können. Des weiteren umfasst die Ansteuerschaltung 26 eine Verarbeitungseinheit 34 (FIG 4) in Form oder nach Art eines Mikroprozessors und einen Zeitgeber 36 (FIG 4), so dass ein Vergleich der zwischengespeicherten Ansteuersignalzeitpunkte 24 mit einem jeweils aktuellen Wert des Zeitgebers 36 und darauf basierend eine Generierung von Ansteuersignalen 20 möglich ist.

FIG 4 zeigt die Ansteuerschaltung 26 mit weiteren Details. Danach umfasst die Ansteuerschaltung 26 eine Schnittstelleneinheit 28 zum Anschluss einer seriellen Verbindung 22. Zum Zwischenspeichern von über die serielle Verbindung 22 empfangenen Ansteuersignalzeitpunkten 24 ist ein Speicher 30 vorgesehenen. Im Speicher 30 ist neben den jeweils dort zwischengespeicherten Ansteuersignalzeitpunkten 24 auch ein Steuerprogramm 32, das die Funktionalität der Ansteuerschaltung 26 bestimmt, gespeichert. Das Steuerprogramm 32 wird im Betrieb der Antriebssteuerungseinrichtung 10 oder der Ansteuerschaltung 26 durch eine dafür vorgesehene Verarbeitungseinheit 34 ausgeführt. Dabei vergleicht die Verarbeitungseinheit 34 einen Wert der zwischengespeicherten Ansteuersignalzeitpunkte 24 mit einem von einem Zeitgeber 36 gelieferten Zeitwert. In Abhängigkeit vom Ergebnis des Vergleichs, also z.B. bei Übereinstimmung, wird das zu dem jeweiligen Ansteuersignalzeitpunkt 24 gehörige Ansteuersignal 20 generiert. Eine diesbezügliche Zuordnung kann darauf basieren, dass die zwischengespeicherten Ansteuersignalzeitpunkte 24 im Speicher 30 in einer festen Reihenfolge abgelegt sind und bei Übereinstimmung des in einer ersten Speicherstelle des Speichers 30 abgelegten zwischengespeicherten Ansteuersignalzeitpunkts 24 mit dem Momentanwert des Zeitgebers 36 ein zur Ansteuerung eines ersten Halbleiterschalters T vorgesehenes Ansteuersignal 20 erzeugt wird. Dieses Schema lässt sich für eine zweite Speicherstelle und ein zur Ansteuerung eines zweiten Halbleiterschalters vorgesehenes Ansteuersignal 20 usw. fortsetzen.

## Patentansprüche

1. Verfahren zum Betrieb einer Antriebssteuerungseinrichtung (10) mit einem Wechselrichter (16) mit durch Ansteuersignale (20) ansteuerbaren Halbleiterschaltern,
wobei eine Ansteuerlogik (18) für jedes Ansteuersignal (20) einen Ansteuersignalzeitpunkt (24) ermittelt und
wobei anhand der Ansteuersignalzeitpunkte (24) auf der Hochspannungsseite Ansteuersignale (20) zur Ansteuerung der Halbleiterschalter generiert werden,
**dadurch gekennzeichnet,**
**dass** die Ansteuersignalzeitpunkte (24) im Betrieb von einer Niederspannungsseite der Antriebssteuerungseinrichtung (10) mit der Ansteuerlogik (18) zu einer Hochspannungsseite der Antriebssteuerungseinrichtung (10) mit dem Wechselrichter (16) übertragen werden und
**dass** die Übertragung der Ansteuersignalzeitpunkte (24) während der Schaltpausen der Halbleiterschalter erfolgt.

2. Verfahren nach Anspruch 1, wobei eine Ermittlung einer Lage und Länge von Schaltpausen der Halbleiterschalter durch die Ansteuerlogik (18) zusammen mit der Ermittlung der Ansteuersignalzeitpunkte (24) erfolgt.

3. Verfahren nach Anspruch 1 oder 2, wobei die Ansteuersignalzeitpunkte (24) von der Ansteuerlogik (18) zu einer Ansteuerschaltung (26) auf der Hochspannungsseite der Antriebssteuerungseinrichtung (10) übermittelt werden, wobei die Ansteuerschaltung (18) die übermittelten Ansteuersignalzeitpunkte (24) zwischenspeichert, wobei die Ansteuerschaltung (18) die zwischenspeicherten Ansteuersignalzeitpunkte (24) mit dem Wert eines Zeitgebers (36) vergleicht und wobei in Abhängigkeit vom Ergebnis des Vergleichs jeweils ein Ansteuersignal (20) generiert wird.

4. Verfahren nach einem der Ansprüche 1, 2 oder 3, wobei die Übertragung der Ansteuersignalzeitpunkte (24) durch eine serielle Übertragung erfolgt.

5. Verfahren nach Anspruch 4, wobei die serielle Übertragung in Form genau eines Telegramms in der Mitte eines Schaltintervalls der Halbleiterschalter erfolgt.

6. Verfahren nach Anspruch 4, wobei die serielle Übertragung in Form genau zweier Telegramme mit darauf aufgeteilten Ansteuersignalzeitpunkten (24) erfolgt, von denen eines am Anfang eines Schaltintervalls der Halbleiterschalter und eines in der Mitte des Schaltintervalls übertragen wird.

7. Antriebssteuerungseinrichtung mit einer Ansteuerlogik (18) und einer damit kommunikativ verbundenen Ansteuerschaltung (26) als Mittel zur Ausführung des Verfahrens nach einem der Ansprüche 1 bis 6, wobei mit der Ansteuerlogik (18) Ansteuersignalzeitpunkte (24) zur Ansteuerung der Halbleiterschalter der Antriebssteuerungseinrichtung (10) und ausgehend davon Schaltpausen der Halbleiterschalter ermittelbar sind, wobei durch die Ansteuerlogik (18) die Ansteuersignalzeitpunkte (24) während der Schaltpausen an die Ansteuerschaltung (26) übermittelbar sind und wobei mit der Ansteuerschaltung (26) anhand der Ansteuersignalzeitpunkte (24) und einer Zeitinformation Ansteuersignale (20) zur Ansteuerung der Halbleiterschalter generierbar sind.

8. Antriebssteuerungseinrichtung nach Anspruch 7, mit einem Speicher (30), einer Verarbeitungseinheit (34) und einem Zeitgeber (36), wobei im Speicher (30) zwischengespeicherte oder zwischenspeicherbare Ansteuersignalzeitpunkte (24) durch die Verarbeitungseinheit (34) mit einem von dem Zeitgeber (36) gelieferten Zeitwert vergleichbar sind und wobei durch die Verarbeitungseinheit (34) in Abhängigkeit vom Ergebnis des Vergleichs ein Ansteuersignal (20) zur Ansteuerung eines Halbleiterschalters generierbar ist.

9. Computerprogramm mit Programmcodemitteln zur Implementation eines Verfahrens gemäß einem der Ansprüche 1 bis 6.

10. Datenträger mit einem Computerprogramm nach Anspruch 9.

11. Antriebssteuerungseinrichtung, auf der ein Computerprogramm nach Anspruch 9 geladen ist.

## Claims

1. Method for operating a drive control device (10) having an inverter (16) comprising semiconductor switches which can be controlled by means of control signals (20),
- wherein control logic (18) calculates a control signal time instant (24) for each control signal (20) and
- wherein control signals (20) for controlling the semiconductor switches are generated on the high-voltage side on the basis of the control signal time instants (24),
characterised in that- the control signal time instants (24) are transmitted during operation from a low-voltage side of the drive control device (10) containing the control logic (18) to a high-voltage side of the drive control device (10) containing the inverter (16), and
- the transmission of the control signal time instants (24) takes place during the switching pauses of the semiconductor switches.

2. Method according to claim 1, wherein a position and length of switching pauses of the semiconductor switches are determined by the control logic (18) in conjunction with the calculation of the control signal time instants (24).

3. Method according to claim 1 or 2, wherein the control signal time instants (24) are transmitted by the control logic (18) to a control circuit (26) on the high-voltage side of the drive control device (10), wherein the control circuit (18) buffers the transmitted control signal time instants (24), wherein the control circuit (18) compares the buffered control signal time instants (24) with the value of a timer (36), and wherein a control signal (20) is generated in each case as a function of the result of the comparison.

4. Method according to one of claims 1, 2 or 3, wherein the control signal time instants (24) are transmitted by means of a serial transmission.

5. Method according to claim 4, wherein the serial transmission is effected in the form of precisely one telegram midway through a switching interval of the semiconductor switches.

6. Method according to claim 4, wherein the serial transmission is effected in the form of precisely two telegrams having control signal time instants (24) divided between them, one of said telegrams being transmitted at the start of a switching interval of the semiconductor switches and one being transmitted midway through the switching interval.

7. Drive control device comprising control logic (18) and a control circuit (26) communicatively connected thereto as means for executing the method according to one of claims 1 to 6, wherein control signal time instants (24) for controlling the semiconductor switches of the drive control device (10) can be calculated by means of the control logic (18) and switching pauses of the semiconductor switches determined on the basis thereof, wherein the control signal time instants (24) can be transmitted by the control logic (18) to the control circuit (26) during the switching pauses, and wherein control signals (20) for controlling the semiconductor switches can be generated by means of the control circuit (26) on the basis of the control signal time instants (24) and time information.

8. Drive control device according to claim 7, comprising a memory (30), a processing unit (34) and a timer (36), wherein control signal time instants (24) which are or can be buffered in the memory (30) can be compared by means of the processing unit (34) with a time value supplied by the timer (36), and wherein a control signal (20) for controlling a semiconductor switch can be generated by the processing unit (34) as a function of the result of the comparison.

9. Computer program having program code means for implementing a method according to one of claims 1 to 6.

10. Data medium containing a computer program according to claim 9.

11. Drive control device on which a computer program according to claim 9 is loaded.

## Revendications

1. Procédé pour faire fonctionner un dispositif (10) de commande d'entraînement, comprenant un onduleur (16) ayant des commutateurs à semi-conducteurs pouvant être commandés par des signaux (20) de commande,
dans lequel une logique (18) de commande détermine, pour chaque signal (20) de commande, un instant (24) de signal de commande et
dans lequel, à l'aide des instants (24) de signal de commande, on produit, du côté de la haute tension, des signaux (20) de commande pour commander les commutateurs à semi-conducteurs,
**caractérisé**
**en ce que** l'on transmet les instants (24) de signal de commande en fonctionnement d'un côté basse tension du dispositif (10) de commande d'entraînement ayant la logique (18) de commande à un côté haute tension du dispositif (10) de commande d'entraînement ayant l'onduleur (16) et
**en ce que** la transmission des instants (24) de signal de commande s'effectue pendant des intervalles de commutation des commutateurs à semi-conducteurs.

2. Procédé suivant la revendication 1, dans lequel une détermination d'une position et d'une longueur des intervalles de commutation des commutateurs à semi-conducteurs s'effectue par la logique (18) de commande ensemble avec la détermination des instants (24) de signal de commande.

3. Procédé suivant la revendication 1 ou 2, dans lequel on transmet les instants (24) de signal de commande de la logique (18) de commande à un montage (26) de commande du côté haute tension du dispositif (10) de commande d'entraînement, le montage (18) de commande mettant en mémoire tampon les instants (24) de signal de commande transmis, le montage (18) de commande comparant les instants (24) de signal de commande mis en mémoire tampon à la valeur d'une horloge (36), et dans lequel on produit respectivement un signal (20) de commande en fonction du résultat de la comparaison.

4. Procédé suivant la revendication 1, 2 ou 3, dans lequel la transmission des instants (24) de signal de commande s'effectue par une transmission en série.

5. Procédé suivant la revendication 4, dans lequel la transmission en série s'effectue sous la forme exactement d'un télégramme au milieu d'un intervalle de commutation des commutateurs à semi-conducteurs.

6. Procédé suivant la revendication 4, dans lequel la transmission série s'effectue sous la forme exactement de deux télégrammes à des instants (24) de signal de commande répartis, dont l'un est transmis au début d'un intervalle de commutation des commutateurs à semi-conducteurs et l'autre au milieu de l'intervalle de commutation.

7. Dispositif de commande d'entraînement, comprenant une logique (18) de commande et un montage (26) de commande relié à celui-ci en communication comme moyen de réalisation du procédé suivant l'une des revendications 1 à 6, dans lequel il peut être déterminé, par la logique (18) de commande, des instants (24) de signal de commande pour commander les interrupteurs à semi-conducteurs du dispositif (10) de commande d'entraînement et, à partir de cela, des intervalles de commutation des commutateurs à semi-conducteurs, dans lequel, par la logique (18) de commande, les instants (24) de signal de commande peuvent, pendant les intervalles de commutation, être transmis au montage (26) de commande et dans lequel, par le montage (26) de commande, il peut être produit, à l'aide des instants (24) de signal de commande et d'une information de temps, des signaux (20) de commande pour commander des interrupteurs à semi-conducteurs.

8. Dispositif de commande d'entraînement suivant la revendication 7, comprenant une mémoire (30), une unité (34) de traitement et une horloge (36), dans lequel, dans la mémoire (30), des instants (24) de signal de commande mis en mémoire tampon ou pouvant l'être peuvent être comparés par l'unité (34) de traitement à une valeur de temps fournie par l'horloge (36) et dans lequel, par l'unité (34) de traitement, il peut être produit, en fonction du résultat de la comparaison, un signal (20) de commande pour commander un commutateur à semi-conducteurs.

9. Programme d'ordinateur ayant des moyens de code de programme pour la mise en oeuvre d'un procédé suivant l'une des revendications 1 à 6.

10. Support de données comprenant un programme d'ordinateur suivant la revendication 9.

11. Dispositif de commande d'entraînement, sur lequel un programme d'ordinateur suivant la revendication 9 est chargé.
